# EUROPÄISCHE PATENTANMELDUNG

(11) **EP 1 022 477 A1**
(43) Veröffentlichungstag der Anmeldung: **26.07.2000**
(21) Anmeldenummer: 99125168.7
(22) Anmeldetag: 17.12.1999
(51) Int. Cl.: F16C 29/06, F16C 33/30

(54) **Wälzlager-Linearführung**

(30) Priorität: 19.01.1999 CH 9499; 06.05.1999 CH 85399
(71) Anmelder: Schneeberger Holding AG, 4914 Roggwil (CH)
(72) Erfinder: Schneeberger, Hans-Martin, 4900 Langenthal (CH); Michaelsen, Georg, 4914 Roggwil (CH)
(74) Vertreter: EGLI-EUROPEAN PATENT ATTORNEYS

(57) **Zusammenfassung**

Die Erfindung betrifft einen Führungskörper einer Linearbewegungsführung, welcher zur Anordnung und zur Ausführung von Längsbewegungen auf einer Schiene (1) vorgesehen ist. Derartige Führungskörper (2) sind mit zumindest einem Wälzkörperumlauf (6a - 6d) versehen, wobei jeder Wälzkörperumlauf einen Rücklaufkanal, eine Tragzone (11) sowie zwei den Rücklaufkanal (12) und die Tragzone (11) miteinander verbindende Umlenkkanäle (13) aufweist, und in jedem Wälzkörperumlauf mehrere Wälzkörper (7) enthalten sind, wobei zur Führung der Wälzkörper im Wälzkörperumlauf Führungsmitteln vorgesehen sind. Bei einem derartigen Führungskörper soll eine Möglichkeit geschaffen werden, auf eine Schmiermittelzufuhr verzichten zu können. Die Erfindung schlägt hierzu vor, dass zumindest ein Teil der Führungsmittel zumindest im Bereich von Laufflächen für die Wälzkörper einen Kunststoff mit zumindest zwei Komponenten aufweist, die erste Komponente in Form von Partikeln in der zweiten Komponente eingelagert ist, die erste Komponente gegenüber einem metallischen oder keramischen Reibpartner einen geringeren Reibungskoeffizienten aufweist als die zweite Komponente, und die jeweiligen Führungsmittel zumindest im Bereich der Laufflächen durch Spritzgiessen des Kunststoffes erzeugt sind.

## Beschreibung

Die Erfindung betrifft einen Führungskörper einer Linearbewegungsführung, welcher zur Anordnung und zur Ausführung von Längsbewegungen auf einer Schiene vorgesehen ist, der mit zumindest einem Wälzkörperumlauf versehen ist, wobei jeder Wälzkörperumlauf einen Rücklaufkanal, eine Tragzone sowie zwei den Rücklaufkanal und die Tragzone miteinander verbindende Umlenkkanäle aufweist, der in jedem Wälzkörperumlauf mehrere Wälzkörper enthält, und der zur Führung der Wälzkörper im Wälzkörperumlauf mit Führungsmitteln versehen ist.

Wälzlagerlinearführungen werden in vielen Bereichen der Technik eingesetzt, in denen ein Bauteil gegenüber einem anderen Bauteil geradlinig und möglichst ohne Reibungsverluste bewegt werden soll. Ein Beispiel hierfür sind Werkzeugmaschinen. Derartige Führungen weisen als Führungskörper einen Wagen oder Schlitten auf, der über Wälzkörper, wie Kugeln, Rollen oder Nadeln, an einer Schiene geführt ist. Die Wälzkörper zirkulieren hierbei in in sich geschlossenen Wälzkörperumläufen des Wagens. Sie weisen üblicherweise eine Tragzone auf, in welcher die Wälzkörper an einer Tragfläche des Wagens und an der Schiene anliegen und hierdurch die zu bewegende Last tragen. Durch die Linearbewegung des Wagens gelangen die Wälzkörper aus der Tragzone in einen ersten Umlenkkanal, in dem die Wälzkörper von der Tragzone in den Rücklaufkanal überführt werden. Nach Durchlaufen des Rücklaufkanals erreichen die Wälzkörper über einen zweiten Umlenkkanal wieder die Tragzone.

Insbesondere, um den Verschleiss der Wälzkörper zu minimieren, und um die Laufruhe einer Linearführung zu verbessern, ist es bereits seit langem bekannt, die Flächen des Wagens, mit denen die Wälzkörper in Kontakt kommen, durch Kunststoffbauteile zu bilden. So wird beispielsweise in der DE 35 40 099 beschrieben, die Führungsflächen des Rücklaufkanals als gesondert hergestellte Hülsen vorzusehen, die später in entsprechende Ausnehmungen des metallischen Grundkörpers des Wagens eingefügt werden. Bei dieser Konstruktion kann als nachteilig empfunden werden, dass eine genaue Fertigung und eine sehr exakte und aufwendige Montage nötig ist. Zudem entstehen an dieser zweiteiligen Hülsenausführung zusätzliche Übergänge, die die Laufruhe beeinträchtigen können.

Desweiteren wird in der DE 43 31 014 C2 beschrieben, Führungsmittel in den Tragzonen und den Rücklaufkanälen dadurch zu erzeugen, dass an den metallischen Grundkörper des Wagens die Führungsflächen in einem Kunststoffspritzverfahren direkt angespritzt werden. Ebenso wie bei dem zuvor erwähnten Wagen, ist aber auch bei diesem vorbekannten Wagen eine relativ aufwendige Schmiermittelversorgung erforderlich. Diese sieht vor, von aussen ins Innere des Wagens ein Schmiermittel zur Schmierung der üblicherweise metallischen Wälzkörper zuzuführen. Hiermit soll der Verschleiss der Wälzkörper reduziert und damit die Lebensdauer der Führung verlängert werden. Die vorbekannten Schmiermittelversorgungen erhöhen jedoch den konstruktiven Aufwand und verteuern damit die Linearführung. Ausserdem kann ein Defekt der Schmiermittelversorgungen nicht ausgeschlossen werden, wodurch an der Maschine, in welcher die Linearführung eingesetzt wird, ein ganz erheblicher Schaden entstehen kann.

Der Erfindung liegt deshalb die Aufgabe zugrunde, einen Wagen zu schaffen, mit dem die beschriebenen Nachteile des Standes der Technik vermieden werden können. Es soll insbesondere ein Wagen geschaffen werden, bei dem eine Schmiermittelversorgung bzw. -zuführung der vorbekannten Art zumindest weitestgehend entbehrlich ist.

Diese Aufgabe wird bei einem Führungskörper der eingangs genannten Art dadurch gelöst, dass in zumindest einem Teil des Werkstoffes, mit dem die Führungsmittel ausgebildet sind, ein Mittel enthalten bzw. eingebunden ist, das den Verschleiss der Linearführung, insbesondere den Veschleiss der Wälzkörper, reduziert. Erfindungsgemässe Führungen können somit einen Mehrkomponentenwerkstoff aufweisen, in dem der den Verschleiss vermindernde Werkstoff matrixähnlich eingebunden ist. Der resultierende Werkstoff ist heterogen und bezüglich seines Aufbaus mit üblichen Verbundwerkstoffen vergleichbar, wobei im Unterschied zu diesen eine Komponente der erfindungsgemässen ,,Verbundwerkstoffe" die Reibung mit Wälzkörpern vermindern soll und zumindest nicht primär zur Steigerung der Festigkeit des Werkstoffes dient.

Es hat sich gezeigt, dass sich eine besonders gute Verarbeitung dieses Materials erreichen lässt, wenn der Werkstoff ein durch ein Spritzgiessverfahren zu verarbeitenden thermoplastischen Kunststoff enthält, dem ein Festkörper-Schmiermittel beigegeben ist. Der Führungskörper lässt sich mit besonders wenig Aufwand erzeugen, wenn ganze Bauteile des Führungskörpers im Spritzgiessverfahren aus lediglich dem einen Werkstoff erzeugt werden. Das Festkörper-Schmiermittel kann hierbei unterschiedlich konfektioniert sein. Es hat sich jedoch als günstig erwiesen, wenn es in Form von Fasern beigegeben ist. In dieser bevorzugten Ausführungsform sollten die Fasern den Trockenlauf, d.h. die schmiermittelfreie Zirkulation, der Wälzkörper ermöglichen.

In praktischen Erprobungen haben sich Fasern aus PTFE (Polytetrafluorethylene), sog. Teflon® (Handelsmarke und eingetragenes Warenzeichen der Firma DuPont), als vorteilhaft erwiesen, da sie zu besonders geringem Verschleiss der Wälzkörper geführt haben. Zwar ist Teflon bei hoher Flächenpressung als besonders verschleissanfällig bekannt und gerade Wälzkörperlagerungen von Linearführungen stellen besonders hohe Anforderungen an die Verschleissfestigkeit. Trotzdem hat sich überraschenderweise gezeigt, dass sich mit einem zur Spritzgussverarbeitung geeigneten thermoplastischen Kunststoff, wie beispielsweise die zur Gruppe der Polyacetale gehörenden POM-Kunststoffe (Polyoxymethylen), zugegebene PTFE-Partikel vergleichsweise hohe Lebensdauerzeiten der Linearbewegungsführungen erreichen lassen. Alternativ zu PTFE könnte auch Polyfluorethylenpropylen oder Perfluoralkoxy verwendet werden.

Es hat sich ferner als günstig erwiesen, wenn die Partikel in Form von Fasern vorliegen, deren Länge von 100 µm bis 700 µm, vorzugsweise von 170 µm bis 500 µm und deren Breite von 10 µm bis 100 µm, bevorzugt von 20 µm bis 40 µm, beträgt. Die Partikel sollten zumindest im Bereich der Oberfläche der Führungsmittel einen Volumenanteil von 5% bis 35%, bevorzugt von 12 % bis 15 %, am entsprechenden Gesamtvolumen des Werkstoffes aufweisen. Selbstverständlich können die Partikel auch in anderen Konfektionierungen als Fasern und in anderen Grössen und Mengen als den genannten vorliegen. So könnten die Partikel beispielsweise auch in Form von Kugeln vorhanden sein.

In Bezug auf die Lebensdauer der Linearführungen, insbesondere von schmiermittelfreien Linearführungen, lassen sich besonders gute Ergebnisse erreichen, wenn zumindest für einige der Wälzkörper ein keramischer Werkstoff verwendet wird, wie beispielsweise Si₃N₄, ZrO₂ oder Al₂O₃. Die Anmelderin hat in diesem Zusammenhang die Schweizer Patentanmeldung 1998 1388/98 hinterlegt, deren Offenbarungsgehalt hinsichtlich verwendbarer Werkstoffe und Aufbau derartiger Wälzkörper durch Bezugnahme vollständig aufgenommen wird. Eine besonders vorteilhafte Kombination besteht im Einsatz solcher Wälzkörper zusammen mit der bereits angegebenen Verwendung von Fasern oder Partikel aus PTFE in einem Kunststoff der Führungsmittel.

Selbstverständlich können auch andere Stoffe als PTFE zum Einsatz kommen, die dem Werkstoff der Führungsmittel beigegeben werden. Hierzu sind grundsätzlich alle Trockenschmierstoffe, wie beispielsweise sulfidbildende Halogenide oder perfluorierte Kunststoffe, geeignet. Besonders geeignet sind solche Stoffe, bei denen bei möglichst geringem Abrieb der Festkörper-Partikel der Reibungskoeffizient zwischen den Wälzkörpern und dem jeweiligen Führungsmittel möglichst stark reduziert wird. Ausser PTFE ist deshalb beispielsweise auch MoS₂ ein geeigneter Stoff.

Schliesslich ist es auch möglich, dass die den Verschleiss reduzierenden Stoffe als eine auf ein Führungsmittel aufgebrachte Schicht vorliegen. In diesem Fall sind die verschleissmindernden Stoffe nur an Führungs- bzw. Laufflächen der Führungsmittel oder der Schiene vorhanden oder auf die zuvor beschriebenen Führungsmittel zusätzlich aufgebracht. Eine derartige Schicht kann beispielsweise durch Aufspritzen mit einer oder mehreren Düsen, durch Eintauchen der Führungsmittel oder der Schiene in ein Bad, oder durch galvanische Prozesse aufgebracht werden. Derartige Schichten können beispielsweise Polytetrafluorethylen, Polytetrafluorethylenpropylen, Perfluoralkoxy, diamantähnlichen amorphen Kohlenstoff, Chrom und/oder MoS₂ enthalten.

Es ist grundsätzlich nicht erforderlich, dass sämtliche Führungsmittel eines Wälzkörperumlaufes einen erfindungsgemässen Werkstoff aufweisen. Es hat sich als ausreichend erwiesen, wenn zumindest ein Teil der Führungsmittel hiermit versehen sind. Zweckmässigerweise sind deshalb zumindest Führungsmittel der Umlenkkanäle derartig ausgebildet. Dies hat bereits den Vorteil, dass die Reibung an höchstbelasteten Stellen vermindert und zusätzlich eine fertigungstechnisch günstige Lösung erzielt werden kann.

Weitere bevorzugte Ausgestaltungen der Erfindung ergeben sich aus den abhängigen Ansprüchen.

Die Erfindung wird anhand den in den Figuren schematisch dargestellten Ausführungsbeispielen näher erläutert; es zeigen:
- Fig. 1: eine Linearbewegungsführung mit einem Wagen und einer Schiene in einer perspektivischen Darstellung;
- Fig. 2: eine erfindungsgemässe Linearbewegungsführung in einer Schnittdarstellung entlang der Linie II - II;
- Fig. 3: einen vollständigen Wälzkörperumlauf der in den Fig. 1 und 2 gezeigten Linearbewegungsführung;

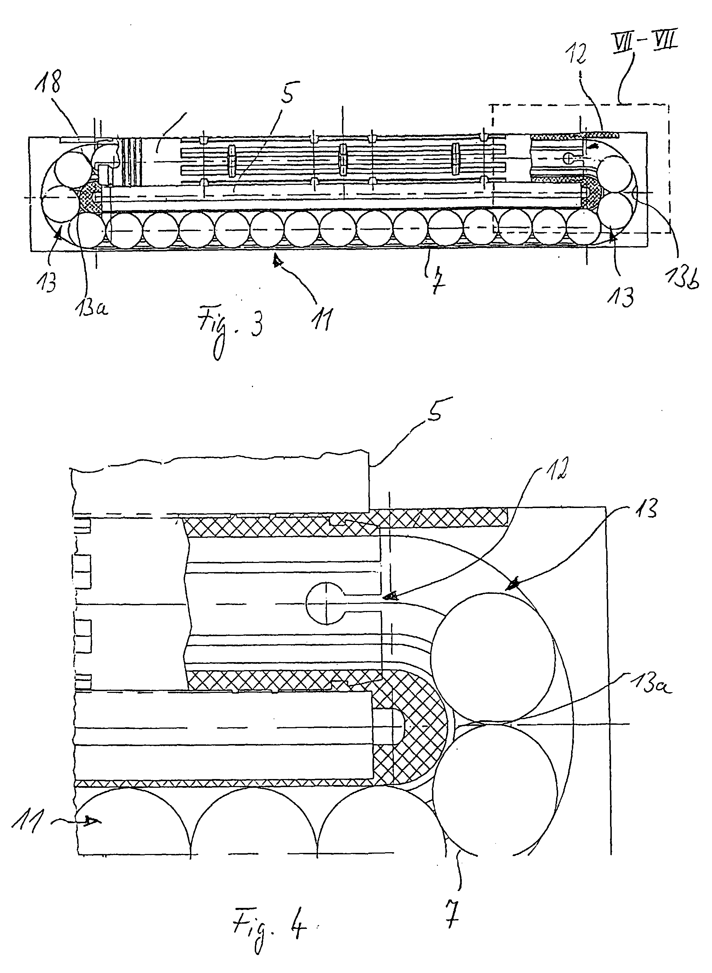

- Fig. 4: eine Teilansicht gemäss Ausschnitt IV-IV aus Fig. 3, in dem ein Umlenkbereich vergrössert dargestellt ist;
- Fig. 5: eine geschnittene Teilansicht eines Wälzkörperumlaufs einer erfindungsgemässen Ausführungsform mit zwei unterschiedlichen Wälzkörpersorten.

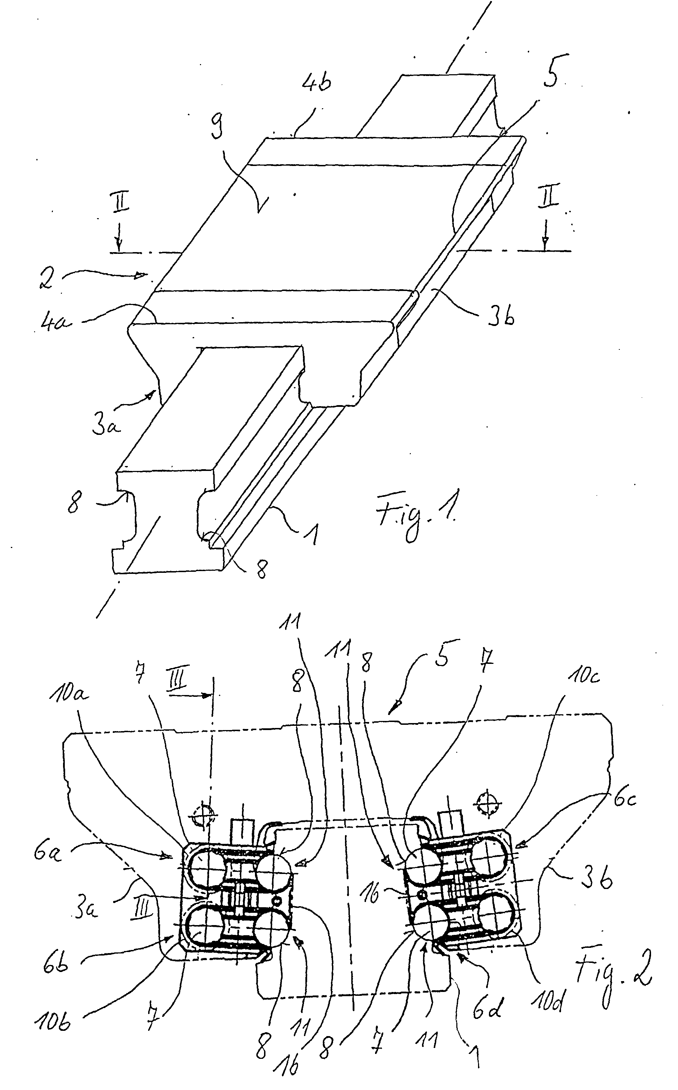

In Fig. 1 ist eine Linearbewegungsführung gezeigt, die eine profilierte Führungsschiene 1 aufweist, auf der sich ein Wagen 2 abstützt und längsverschiebbar angeordnet ist. Wie auch Fig. 2 entnommen werden kann, ist der Wagen 2 im Querschnitt im wesentlichen U-förmig ausgebildet und umgreift mit zwei sich an einen Mittelabschnitt anschliessenden Schenkeln 3a, 3b die Schiene 1. An den Stirnseiten des Wagens sind Kappen 4a, 4b angebracht, die an einem metallischen Grundkörper 5 des Wagens lösbar befestigt sind. Eine Oberseite des Wagens 2 ist als Montagefläche 9 vorgesehen, auf der eine zu bewegende Last befestigt werden kann.

Der Wagen stützt sich über Wälzkörper 7, die in vier jeweils in sich geschlossenen Umläufen 6a, 6b, 6c, 6d angeordnet sind, auf seitlichen Tragflächen 8 der Führungsschiene 1 ab. Im dargestellten Ausführungsbeispiel sind aus einem keramischen Werkstoff, nämlich Si₄N₃, ganz oder teilweise bestehende Kugeln als Wälzkörper 7 vorgesehen. Die Tragflächen 8 sind profiliert, so dass eine Linienberührung zwischen den Kugeln und der Führungsschiene entsteht.

Im metallischen Grundkörper 5 sind vier zylindrische Ausnehmungen 10a, 10b, 10c, 10d eingebracht, deren jeweilige Längsachse parallel zur Längsachse der Schiene 1 verläuft. Jede dieser Ausnehmungen 10a - 10d ist Bestandteil von einem der Wälzkörperumläufe 6a - 6d. Letztere weisen zur Führung der Wälzkörper jeweils Führungsmittel auf, die jeweils in einer Tragzone 11, einer Ausnehmung 10a-d für einen Rücklaufkanal 12 und zwei jeweils die Enden der Rücklaufkanäle 12 und der Tragzone 11 miteinander verbindende Umlenkkanäle 13, angeordnet sind.

Wie Fig. 3 zeigt, weist jede der beiden Umlenkungkanäle 13 eine äussere und eine innere Umlenkführung 13a, 13b auf. In der Darstellung von Fig. 2 ist zu erkennen, dass in der Tragzone 11 als Führungsmittel Rückhaltemittel 16 vorhanden sind, mit denen die Kugeln einerseits geführt und andererseits vor einem Herausfallen aus dem Wagen 2 gehindert werden.

Die innere Umlenkführungen 13a können, ebenso die Führungsmittel der Tragzone 11, in einem Spritzgiessverfahren direkt an den metallischen Grundkörper 5 des Wagens 2 "angespritzt" sein. Die Führungsmittel der Rücklaufkanäle können ebenfalls direkt an den Grundkörper angespritzt werden. Die Führungsmittel der Rücklaufkanäle 12 können aber auch ein hülsenförmiges Element aufweisen, das ausserhalb des Wagens 2 durch Kunststoffspritzgiessen hergestellt und danach in die entsprechende Ausnehmung des Wagens eingeschoben wird.

Es hat sich bereits als ausreichend erwiesen, wenn hierbei Führungsmittel, vorzugsweise sämtliche Führungsmittel, der Umlenkungkanäle 13 aus einem anderen Kunststoff als die restlichen Führungsmittel bestehen. Die Führungsmittel der Tragzone 11 und des Rücklaufkanals 12 können somit aus einem homogenen, thermoplastischen und zum Kunststoffspritzgiessen geeigneten Kunststoff, nämlich einem POM, gefertigt. Konkret wurde hierzu der unter der Bezeichnung Delrin 500 CL von dem Unternehmen DuPont vertriebene Kunststoff verwendet.

Die innere Umlenkungführung wurde hingegen durch Einspritzen von dem unter der Bezeichnung Delrin 500 AF vom gleichen Unternehmen vertriebenen Kunststoff gefertigt. Dieser entspricht im wesentlichen Delrin 500 CL, ihm sind jedoch zusätzlich Fasern aus PTFE zugegeben, wobei die Fasern wie folgt konfektioniert sind:

| | |
|---|---|
| Faserlänge | 170 µm bis 500 µm |
| Faserdicke | 20 µm bis 40 µm |
| Volumenanteil PTFE im Kunststoff | 12 % bis 15 % |

Auch die Rückhaltemittel 16 können durch ein Kunststoffspritzgiessverfahren direkt an den Grundkörper 5 "angespritzt" werden. Hierzu wird der metallische Grundkörper 5 des Wagens 2 in eine Form einer Spritzgussmaschine angeordnet. Anschliessend werden Kerne in die Ausnehmungen 10a-10d eingefahren und die Form geschlossen. Nun wird Delrin 500 CL in die Bereiche der Tragzone eingespritzt, während in den Bereich der inneren Umlenkungführung Delrin 500 AF eingebracht wird. Durch die nachfolgende Abkühlung der beiden Kunststoffe verbinden diese sich an ihren Übergangsbereichen miteinander. Danach werden die Kerne aus dem Wagen herausgezogen, die Form geöffnet und der Wagen entnommen. Anschliessend können die hülsenförmige Elemente in die entsprechenden Ausnehmungen des Wagens eingesetzt werden.

Bei diesem Spritzgiessverfahren wurde der Werkstoff Delrin 500 AF bei für Kunststoffspritzgiessverfahren üblichen Temperaturen und Drücken in die Form eingespritzt. Die Kerne wurden entfernt, nachdem die Temperatur des Werkstoffes ausreichend abgekühlt war.

Beim dargestellten Ausführungsbeispiel sind die Führungsmittel der äusseren Umlenkungführungen ebenfalls ein aus Delrin 500 AF hergestelltes Kunststoffteil. Dieses ist in einem gesonderten Spritzgiessverfahren hergestellt und durch eine Schnappverbindung am jeweiligen inneren Führungsmittel befestigt. Dieses Bauteil wurde im wesentlichen unter den gleichen Bedingungen hergestellt, wie die zuvor angegebene innere Umlenkung.

Selbstverständlich ist es in weiteren Ausführungsformen der Erfindung auch möglich, sämtliche Führungsmittel des Wagens aus Delrin 500 AF herzustellen. Ebenso ist es möglich, auch andere als die dargestellten Führungsmittel ausserhalb des metallischen Grundkörpers herzustellen und nach ihrer Fertigstellung an dem Grundkörper anzubringen. So ist es insbesondere möglich, sämtliche Führungsmittel erst nach ihrer Herstellung am Wagen zu befestigen. In einer weiteren erfindungsgemässen Ausführungsform kann aber ebenso vorgesehen sein, dass auch die Führungsmittel der Rücklaufkanäle direkt an den Wagen angespritzt werden.

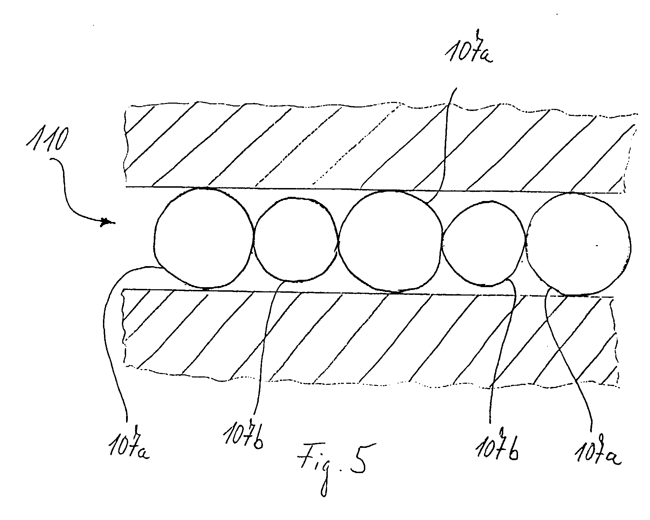

In Fig. 5 ist eine weitere erfindungsgemässe Ausführungsform gezeigt, welche mit den zuvor beschriebenen Führungsmitteln versehen sein kann. Im Unterschied hierzu sind in den Wälzkörperumlaufen - von denen lediglich ein Rücklaufkanal eines Wälzkörperumlaufs 110 ausschnittsweise gezeigt ist - in alternierender Weise Wälzkörper 107a, 107b unterschiedlicher Werkstoffe angeordnet. Die Werkstoffe sollten sich insbesondere hinsichtlich ihrer Härte unterscheiden. Für die beiden Kugelsorten können als Werkstoffe beispielsweise Keramik und Kunststoff, insbesondere POM und/oder PTFE, verwendet werden. Ebenso ist eine Paarung Keramik/Stahl denkbar.

Wie Fig. 5 zu entnehmen ist, weisen die dort gezeigten Keramikkugeln 107a einen grösseren Durchmesser auf, als die jeweils zwischen zwei Keramikkugeln 107a angeordneten weicheren Kunststoffkugeln 107b. Dies führt vor allem dazu, dass die weicheren Kugeln 107b keine Last tragen. Im Ausführungsbeispiel können die tragenden Kugeln 107a mit einem Durchmesser von 6,35cm versehen sein, während die Kunststoffkugeln 107b einen Durchmesser von 6mm aufweisen. Das sich hieraus ergebende Verhältnis der beiden Durchmesser kann auch bei tragenden Kugeln und deren Opferkugeln mit anderen Grössen oder aus anderen Werkstoffen beibehalten werden.

Durch diese Anordnung kann der Verschleiss, insbesondere die Tribooxidation der hier tragenden Keramikkugeln 107a reduziert werden. Da die tragenden Keramikkugeln 107a härter sind als die als "Opferkugeln" fungierenden Kunststoffkugeln 107b verschleissen aufgrund der zwischen den Kugeln stattfindenden Reibung vor allem die Kunststoffkugeln 107a. Diese weitere Verminderung des Verschleisses der tragenden Kugeln kann dazu beitragen, die Lebensdauer von erfindungsgemässen Lagerungen, die kein - oder zumindest nahezu kein - fluides Schmiermittel aufweisen, zu erhöhen. Ausserdem sind damit auch Bewegungen des Wagens mit besonders verschleissträchtigen kleinen Hüben möglich, ohne dass übermässiger Verschleiss auftritt. Unter "kleinen Hüben" sind hierbei insbesondere Hübe des Wagens zu verstehen, die kleiner als der Durchmesser der tragenden Kugeln sind.

Insbesondere bei einer derartigen Ausführungsform kann ausserdem vorgesehen sein, dass Führungsmittel für die Wälzkörper ganz oder teilweise mit einer dünnen Hart-Chrom-Schicht mit molekularer Bindung zum Trägermaterial versehen ist. Die Schichtdicke sollte vorzugsweise einen Wert aus dem Bereich von 1 µm und 4 µm aufweisen. Besonders bevorzugt ist eine Schichtdicke von ca. 3 µm. Derartige Beschichtungen sind beispielsweise unter der Bezeichnung "Duralloy-matt" (Duralloy® ist eine eingetragene Marke der Duralloy AG, Härkingen, Schweiz) bekannt geworden und können galvanisch aufgebracht werden. Hierbei ist besonders vorteilhaft, wenn auch die Laufflächen der Führungsschiene mit einer derartigen reibungsmindernden Schicht versehen sind. Alternativ zu einer reinen Chrom-Schicht kann auch eine Schicht verwendet werden, die molekular gebundenes Chrom (beispielsweise Duralloy matt) in Verbindung mit MOS₂ und/oder einer diamantähnlichen, amorphen Kohlenstoffschicht aufweist.

## Patentansprüche

1. Führungskörper einer Linearbewegungsführung, welcher zur Anordnung und zur Ausführung von Längsbewegungen auf einer Schiene vorgesehen ist, der Führungskörper mit zumindest einem Wälzkörperumlauf versehen ist, wobei jeder Wälzkörperumlauf einen Rücklaufkanal, eine Tragzone sowie zwei den Rücklaufkanal und die Tragzone miteinander verbindende Umlenkkanäle aufweist, in jedem Wälzkörperumlauf mehrere Wälzkörper enthalten sind, wobei der Führungskörper zur Führung der Wälzkörper im Wälzkörperumlauf mit Führungsmitteln versehen ist, **dadurch gekennzeichnet**, dass zumindest ein Teil der Führungsmittel zumindest im Bereich von Laufflächen der Führungsmittel für die Wälzkörper (7) einen Kunststoff mit zumindest zwei Komponenten aufweist, die erste Komponente in Form von Partikeln in der zweiten Komponente eingelagert ist, die erste Komponente gegenüber einem metallischen oder keramischen Reibpartner einen geringeren Reibungskoeffizienten aufweist als die zweite Komponente, und die jeweiligen Führungsmittel zumindest im Bereich der Laufflächen durch Spritzgiessen des Kunststoffes erzeugt sind.

2. Führungskörper nach Anspruch 1, dadurch gekennzeichnet, dass zumindest ein Teil der mit dem Kunststoff versehenen Führungsmittel an einen metallischen Grundkörper (5) des Führungskörpers angespritzt und mit diesem unlösbar verbunden ist.

3. Führungskörper nach einem oder beiden der vorhergehenden Ansprüche, dadurch gekennzeichnet, dass Wälzkörper (7) zumindest an ihrer Oberfläche einen keramischen Werkstoff, insbesondere Siliziumnitrid (Si₃N₄), aufweisen.

4. Führungskörper nach einem oder mehreren der vorhergehenden Ansprüche, dadurch gekennzeichnet, dass die zweite Komponente des Kunststoffs ein Thermoplast enthält.

5. Führungskörper nach Anspruch 4, dadurch gekennzeichnet, dass der Kunststoff Polyoxymethylen oder ein anderes Polyacetalen enthält.

6. Führungskörper nach einem oder mehreren der vorhergehenden Ansprüche, dadurch gekennzeichnet, dass die erste Komponente zumindest zu einem Teil als Fasern konfektioniert ist.

7. Führungskörper nach einem oder mehreren der vorhergehenden Ansprüche, dadurch gekennzeichnet, dass die erste Komponente einen perfluorierten Kunststoff enthält.

8. Führungskörper nach Anspruch 7, dadurch gekennzeichnet, dass die erste Komponente Polytetraflourethylen (PTFE) enthält.

9. Führungskörper nach einem oder mehreren der vorhergehenden Ansprüche, dadurch gekennzeichnet, dass die erste Komponente einen Volumenanteil von 5% bis 35%, vorzugsweise 12% bis 15%, am Gesamtvolumen des Kunststoffs hat.

10. Führungskörper nach einem oder mehreren der vorhergehenden Ansprüche 6 bis 9, dadurch gekennzeichnet, dass die Fasern der ersten Komponente eine Länge von 100 µm bis 700 µm, vorzugsweise 170 µm bis 500 µm und deren Breite von 10 µm bis 100 µm, bevorzugt von 20 µm bis 40 µm, beträgt.

11. Führungskörper nach einem oder mehreren der vorhergehenden Ansprüche, dadurch gekennzeichnet, dass die Wälzkörper zur schmiermittelfreien Zirkulation im Wälzkörperumlauf vorgesehen sind.

12. Führungskörper nach Anspruch 1, dadurch gekennzeichnet, dass er als Wagen ausgebildet ist, der einen Mittelabschnitt und zwei sich jeweils an den Mittelabschnitt anschliessende Schenkel aufweist, wodurch der Wagen im Querschnitt im wesentlichen eine U-Form und eine zur vorgesehenen Längsbewegungsachse parallel verlaufende Ausnehmung aufweist, und der Wagen im Bereich der beiden Schenkel mit jeweils zumindest einem Wälzkörperumlauf versehen ist.

13. Führungskörper einer Linearbewegungsführung, insbesondere nach einem oder mehreren der vorhergehenden Ansprüche 1 bis 12, der zur Anordnung und zur Ausführung von Längsbewegungen auf einer Schiene vorgesehen ist, mit zumindest einem Wälzkörperumlauf versehen ist, wobei jeder Wälzkörperumlauf einen Rücklaufkanal, eine Tragzone sowie zwei den Rücklaufkanal und die Tragzone miteinander verbindende Umlenkkanäle aufweist, in jedem Wälzkörperumlauf mehrere Wälzkörper enthält, und der zur Führung der Wälzkörper im Wälzkörperumlauf mit Führungsmitteln versehen ist, **dadurch gekennzeichnet**, dass in zumindest einem Wälzkörperumlauf Wälzkörper mit unterschiedlichen Abmessungen angeordnet sind, die zumindest an ihrer Oberfläche aus unterschiedlichen Werkstoffen bestehen.

14. Führungskörper nach dem Oberbegriff von Anspruch 1, dadurch gekennzeichnet, dass zumindest auf einen Teil der Führungsmittel auf deren Oberfläche eine reibungsvermindernde Schicht aufgebracht ist.

15. Führungskörper nach Anspruch 14, dadurch gekennzeichnet, dass die Schicht Polytetrafluorethylen, Polytetrafluorethylenpropylen, Perfluoralkoxy, diamantähnlichen amorphen Kohlenstoff, Chrom und/oder MoS₂ enthält.

16. Wälzkörperumlauf einer Linearbewegungsführung, in dem Wälzkörper zur Zirkulation vorgesehen sind, der einen Rücklaufkanal, eine Tragzone sowie zwei den Rücklaufkanal und die Tragzone miteinander verbindende Umlenkkanäle aufweist, und in dem zur Führung der Wälzkörper Führungsmittel vorgesehen sind, **dadurch gekennzeichnet**, dass zumindest ein Teil der Führungsmittel zumindest im Bereich von Laufflächen für die Wälzkörper einen heterogenen Kunststoff mit zumindest zwei Komponenten aufweist, die erste Komponente in Form von Partikeln in der zweiten Komponente eingelagert ist, und die erste Komponente gegenüber einem metallischen oder keramischen Reibpartner einen geringeren Reibungskoeffizienten aufweist als die zweite Komponente.

17. Linearbewegungsführung mit einer Schiene und einem entlang der Schiene längsverschiebbaren Führungskörper, der sich mit Wälzkörpern an der Schiene abstützt, die in zumindest einem in sich geschlossenen Wälzkörperumlauf angeordnet sind, **gekennzeichnet durch** einen Führungskörper gemäss einem oder mehreren der vorhergehenden Ansprüche 1 bis 16 und einer Schiene, deren zumindest eine Lauffläche für Wälzkörper mit einer reibungsvermindernden Schicht, insbesondere einer Chrom-Schicht, versehen ist.

18. Verwendung eines heterogenen Kunststoffes mit zumindest zwei Komponenten, wobei die erste Komponente Partikel enthält, die PTFE aufweisen, die zweite Komponente einen thermoplastischen Kunststoffs beinhaltet, **dadurch gekennzeichnet**, dass der Kunststoff zur Bildung von Führungsmittel in einem Wälzkörperumlauf eines Führungskörpers einer Linearbewegungsführung verwendet wird.

19. Verwendung nach Anspruch 18, dadurch gekennzeichnet, dass der mit den Partikeln versehene Kunststoff in einem Kunststoffspritzgiessverfahren an einen metallischen Grundkörper des Führungskörpers angespritzt ist.
